# EUROPEAN PATENT SPECIFICATION

(11) **EP 3 553 035 B1**
(45) Date of publication and mention of the grant of the patent: **19.07.2023**
(21) Application number: 17880292.2
(22) Date of filing: 22.11.2017
(51) Int. Cl.: C03B 37/018, C03B 37/014, G02B 6/02

(54) **MANUFACTURING METHOD FOR AN OPTICAL FIBER BASE MATERIAL**
HERSTELLUNGSVERFAHREN FÜR GLASFASERGRUNDMATERIAL
PROCÉDÉ DE FABRICATION DE MATÉRIAU DE BASE DE FIBRE OPTIQUE

(30) Priority: 12.12.2016 JP 2016240482
(43) Date of publication of application: 16.10.2019
(73) Proprietor: Sumitomo Electric Industries, Ltd., Osaka-shi, Osaka 541-0041 (JP)
(72) Inventor: SAKUMA Hirotaka, Yokohama-shi Kanagawa 244-8588 (JP); TAMURA Yoshiaki, Yokohama-shi Kanagawa 244-8588 (JP); MORITA Keisei, Yokohama-shi Kanagawa 244-8588 (JP)
(74) Representative: Hoffmann Eitle
(86) International application number: PCT/JP2017/041986
(87) International publication number: WO 2018/110234

(56) References cited:
- EP-A1- 2 813 477
- EP-A1- 3 040 749
- WO-A1-2013/118389
- WO-A2-2004/020357
- JP-A- 2013 142 049
- JP-A- 2014 162 654
- JP-A- 2016 105 154

## Description

### Technical Field

The present invention relates to an optical fiber preform manufacturing method.

### Background Art

An optical fiber having a core comprised of silica glass containing an alkali metal element has been known. In addition, if a core portion of an optical fiber preform contains the alkali metal element, it is possible to lower the viscosity of the core portion in drawing of the optical fiber preform. Such a decrease in the viscosity of glass advances the relaxation of a network structure of the silica glass, and thus, it is said that a transmission loss of the optical fiber can be reduced.

As a method for doping an alkali metal element to silica glass, a diffusion method is known (see, for example, Patent Documents 1 to 3). As an example of the diffusion method, a method of heating a glass pipe by an external heat source while introducing a raw material vapor of an alkali metal element or alkali metal salt serving as a raw material into the glass pipe is known. As another example of the diffusion method, a method of generating plasma in a glass pipe in parallel with the above-described introduction of materials into the glass pipe is also known. The diffusion method is a method of diffusing and doping an alkali metal element to an inner surface of a glass pipe through the above-described process.

After the alkali metal element is doped in the vicinity of the inner surface of the glass pipe as described above, a diameter of the glass pipe is reduced by heating the glass pipe. After diameter reduction, a region having a predetermined thickness on the inner surface of the glass pipe is removed by etching in order to remove a transition metal element or the like (Ni or Fe, for example) which is doped simultaneously with the doping of the alkali metal element.

After etching, the glass pipe is heated so that the glass pipe is collapsed, whereby a core rod to which the alkali metal element has been doped is obtained. In addition, a cladding portion is synthesized outside the obtained core rod (rod to which alkali metal element has been doped), whereby an optical fiber preform is obtained. Then, an optical fiber can be manufactured by drawing the obtained optical fiber preform.

In addition, it is possible to efficiently lower the viscosity of the core portion by doping two or more kinds of alkali metal elements having different diffusion coefficients in the silica glass. As a result, it is possible to manufacture an optical fiber with reduced Rayleigh scattering loss (see Patent Document 4).

EP 3 040 749 A1 relates to an optical fiber having an alkali metal doped silica glass core. The optical fiber contains an alkali metal and is capable of reducing Rayleigh scattering loss. The optical fiber has a core and a cladding made of silica glass and enclosing the core. The cladding contains fluorine and has a refractive index lower than the refractive index of the core. The core contains first group dopants selected from the group of Na element, K element, or a compound thereof at an average concentration of 0.2 ppm or more and 10 ppm or less.

EP 2 813 477 A1 relates to an optical fiber preform manufacturing method, optical fiber preform, and optical fiber. The method includes a thermal diffusion process for using an alkali metal salt raw material having an average particle size of 1 mm or less in diameter, supplying a vapor of the alkali metal salt produced by heating the alkali metal salt raw material together with a carrier gas to the inside of a silica-based glass pipe from one end side of the glass pipe, and heating the glass pipe using a heat source which relatively moves in a longitudinal direction of the glass pipe to cause an oxidation reaction of an alkali metal and thermally diffuse the alkali metal into an inner side of the glass pipe, a collapsing process for collapsing the glass pipe after the thermal diffusion process to prepare a core rod; and a cladding portion addition process for adding a cladding portion around the core rod prepared in the collapsing process.

WO 2004/020357 A2 relates to a low loss optical fiber and a method for making the same. According to the method, an alkali metal oxide-doped optical fiber is formed by diffusing an alkali metal into a surface of a glass article. The silica glass article may be in the form of a tube or a rod, or a collection of tubes or rods. The silica glass article containing the alkali metal, and impurities that may have been unintentionally diffused into the glass article, is etched to a depth sufficient to remove the impurities. The silica glass article may be further processed to form a complete optical fiber preform which exhibits a low attenuation.

### Citation List

### Patent Literature

Patent Document 1: PCT International Application Publication No. 2013/118389
Patent Document 2: Japanese Unexamined Patent Publication No. 2005-537210
Patent Document 3: US Patent Application Publication No. 2006/0130530
Patent Document 4: Japanese Unexamined Patent Publication No. 2016-105154

### Summary of Invention

### Technical Problem

As a result of examining the conventional optical fiber preform manufacturing methods, the inventors have found out the following problems. That is, the inventors have manufactured an optical fiber preform by diffusing and doping two or more kinds of alkali metal elements to an inner surface of a glass pipe by a diffusion method, and further, have manufactured an optical fiber by drawing the optical fiber preform. However, the inventors have found that there is a case where it is difficult to dope each alkali metal element within an intended concentration range, and it is difficult to sufficiently reduce the Rayleigh scattering loss of the obtained optical fiber. In addition, the inventors have found that there is a case where a transmission loss due to absorption of an OH group having a peak in a wavelength band of 1.38 µm is high enough to exceed 2 dB/km.

The present invention has been made to solve the above-described problems, and an object thereof is to provide an optical fiber preform manufacturing method capable of manufacturing an optical fiber preform by diffusing and doping two or more kinds of alkali metal elements to an inner surface of a glass pipe by a diffusion method, and further, in manufacturing an optical fiber using the optical fiber preform, capable of reducing Rayleigh scattering loss and an OH loss increase of the optical fiber.

### Solution to Problem

This is achieved by the manufacturing method of claim 1. An optical fiber preform manufacturing method at least includes: a first drying step; a second drying step; a thermal diffusion step; a core rod fabrication step; and a cladding portion addition step. In the first drying step, drying of two or more kinds of alkali metal salt raw materials containing mutually different alkali metal elements is performed at a temperature equal to or lower than a lowest temperature among melting point temperatures of the two or more kinds of alkali metal salt raw materials. The second drying step is a step performed after the first drying step. In this second drying step, drying of the two or more kinds of alkali metal salt raw materials is performed at a temperature which is equal to or higher than a highest temperature among the melting point temperatures of the two or more kinds of alkali metal salt raw materials and at which vapor pressures of all the two or more kinds of alkali metal salt raw materials are 266.645 Pa (2 mmHg) or less. The thermal diffusion step is a step performed after the second drying step and is a step of thermally diffusing two or more kinds of alkali metal element oxides on an inner surface of a silica-based glass pipe. In this thermal diffusion step, the two or more kinds of alkali metal salt raw materials are simultaneously heated to generate vapor of the two or more kinds of alkali metal salt raw materials. Further, in the thermal diffusion step, vapor and a carrier gas generated from one end side of the glass pipe are supplied to the inside of the glass pipe so as to cause an oxidation reaction of two or more kinds of alkali metal elements contained in the vapor. Incidentally, the supply of the vapor and carrier gas to the inside of the glass pipe is performed while heating the glass pipe with a heat source relatively moving in the longitudinal direction of the glass pipe. The core rod fabrication step is performed after the thermal diffusion step. In this core rod fabrication step, a core rod is obtained by collapsing the glass pipe. The cladding portion addition step is performed after the core rod fabrication step. In this cladding portion addition step, a cladding portion is added on an outer periphery of the core rod.

### Advantageous Effects of Invention

According to the present invention, the optical fiber preform can be manufactured by diffusing and doping two or more kinds of alkali metal elements to the inner surface of the glass pipe by the diffusion method. In addition, the Rayleigh scattering loss and the OH loss increase of the optical fiber manufactured by drawing the optical fiber preform can be reduced.

### Brief Description of Drawings

Fig. 1 is a flowchart for describing an optical fiber preform manufacturing method according to the present embodiment.
Fig. 2 is a view for describing a first drying step S1, a second drying step S2 and a thermal diffusion step S3.
Fig. 3 is a view illustrating a structure of an optical fiber preform and a schematic structure of a drawing apparatus configured to obtain an optical.
Fig. 4 is a table summarizing a mass of each raw material placed in a raw material reservoir in each of Samples 3A, 3B, and 3C of the present embodiment.
Fig. 5 is a table summarizing a peak concentration of each alkali metal element measured by EPMA in each of Samples 3A, 3B, and 3C of the present embodiment.
Fig. 6 is a table summarizing a transmission loss of an optical fiber at a wavelength of 1550 nm measured in each of Samples 3A, 3B, and 3C of the present embodiment.
Fig. 7 is a table summarizing a mass of each raw material placed in a raw material reservoir in each of Samples 4A, 4B, and 4C.
Fig. 8 is a table summarizing a peak concentration of each alkali metal element measured by EPMA in each of Samples 4A, 4B, and 4C.
Fig. 9 is a table summarizing a transmission loss of an optical fiber at a wavelength of 1550 nm measured in each of Samples 4A, 4B, and 4C.

### Description of Embodiments

### [Description of Embodiments of Invention of Present Application]

First, the content of an embodiment of the invention of the present application will be individually listed and described.
(1) In one aspect, an optical fiber preform manufacturing method according to the present embodiment at least includes: a first drying step; a second drying step; a thermal diffusion step; a core rod fabrication step; and a cladding portion addition step. In the first drying step, drying of two or more kinds of alkali metal salt raw materials containing mutually different alkali metal elements is performed implemented at a temperature equal to or lower than a lowest temperature among melting point temperatures of the two or more kinds of alkali metal salt raw materials. The second drying step is a step performed after the first drying step. In this second drying step, drying of the two or more kinds of alkali metal salt raw materials is performed at a temperature which is equal to or higher than a highest temperature among the melting point temperatures of the two or more kinds of alkali metal salt raw materials and at which vapor pressures of all the two or more kinds of alkali metal salt raw materials are 266.645 Pa (2 mmHg) or less. The thermal diffusion step is a step performed after the second drying step and is a step of thermally diffusing two or more kinds of alkali metal element oxides on an inner surface of a silica-based glass pipe. In this thermal diffusion step, the two or more kinds of alkali metal salt raw materials are simultaneously heated to generate vapor of the two or more kinds of alkali metal salt raw materials. Further, in the thermal diffusion step, vapor and a carrier gas generated from one end side of the glass pipe are supplied to the inside of the glass pipe so as to cause an oxidation reaction of two or more kinds of alkali metal elements contained in the vapor. Incidentally, the supply of the vapor and carrier gas to the inside of the glass pipe is performed while heating the glass pipe with a heat source relatively moving in the longitudinal direction of the glass pipe. The core rod fabrication step is performed after the thermal diffusion step. In this core rod fabrication step, a core rod is obtained by collapsing the glass pipe. The cladding portion addition step is performed after the core rod fabrication step. In this cladding portion addition step, a cladding portion is added on an outer periphery of the core rod.
(2) In one aspect of the present embodiment, the temperature at which the two or more kinds of alkali metal salt raw materials are dried in the second drying step is preferably a temperature at which vapor pressures of all the two or more kinds of alkali metal salt raw materials are 266.645 Pa (2 mmHg) or less and at least one vapor pressure is 133.322 Pa (1 mmHg) or less. In addition, in one aspect of the present embodiment, the temperature at which the two or more kinds of alkali metal salt raw materials are dried in the second drying step may be a temperature at which vapor pressures of all the two or more kinds of alkali metal salt raw materials are 266.645 Pa (2 mmHg) or less and at least one vapor pressure is 66.6612 Pa (0.5 mmHg) or less. Further, in one aspect of the present embodiment, the temperature at which the two or more kinds of alkali metal salt raw materials are dried in the second drying step may be a temperature at which vapor pressures of all the two or more kinds of alkali metal salt raw materials are 266.645 Pa (2 mmHg) or less and at least one vapor pressure is 39.9967 Pa (0.3 mmHg) or less.
(3) In the present invention a difference among the melting point temperatures of the two or more kinds of alkali metal salt raw materials is 50°C or lower.
(4) In one aspect of the present embodiment, all the two or more kinds of alkali metal salt raw materials may be bromine compounds. Furthermore, in one aspect of the present embodiment, all the two or more kinds of alkali metal salt raw materials may be iodine compounds. Further, in one aspect of the present embodiment, all the two or more kinds of alkali metal salt raw materials may be chlorine compounds.
(5) In one aspect of the present embodiment, the glass pipe preferably contains chlorine and fluorine. In this case, an average concentration of each of the chlorine and fluorine contained in the glass pipe is preferably 10 wt ppm or more. On the other hand, a concentration of impurities excluding the chlorine and fluorine among impurities contained in the glass pipe is preferably 10 wt ppm or less. Further, in one aspect of the present embodiment, a maximum peak concentration among concentrations of the two or more kinds of alkali metal elements contained in the vapor generated in the thermal diffusion step is preferably set to 200 wt ppm or more.
(6) An optical fiber preform not according to the present invention is manufactured by the optical fiber preform manufacturing method according to any of the above-described aspects or the present embodiment defined by a combination of two or more aspects, and includes: a core portion comprised of silica glass; and a cladding portion provided on an outer periphery of the core portion and comprised of silica glass. The core portion extends along a central axis and contains two or more kinds of alkali metal elements. Furthermore, a concentration peak of the two or more kinds of alkali metal elements and a concentration peak of OH groups are present in a central portion of the core portion coinciding with the central axis in the core portion. Further, an average concentration of the OH groups is 0.02 wt ppm or less in the core portion. The cladding portion is provided on the outer periphery of the core portion so as to surround the core portion.
(7) An optical fiber not according to the present invention is manufactured by drawing the optical fiber preform according to the present embodiment defined by the above-described aspect, and includes: a core comprised of silica glass; and a cladding provided on an outer periphery of the core and comprised of silica glass. The core extends along a central axis and contains two or more kinds of alkali metal elements. Furthermore, a concentration peak of the two or more kinds of alkali metal elements and a concentration peak of OH groups are present in a central portion of the core coinciding with the central axis in the core. The cladding is provided on the outer periphery of the core so as to surround the core. In the optical fiber according to the present embodiment having the structure as described above, a transmission loss increase due to the OH group absorption in a wavelength band of 1.38 µm is 1.0 dB/km or less.

### [Details of Embodiment of Invention of Present Application]

Hereinafter, specific structures of the optical fiber preform manufacturing method, the optical fiber preform, and the optical fiber will be described in detail with reference to the attached drawings. Incidentally, the invention is not limited to these examples, but is illustrated by the claims, and any modification within the scope of the claims are intended to be included therein. In addition, the same elements in the description of the drawings will be denoted by the same reference signs, and redundant descriptions will be omitted.

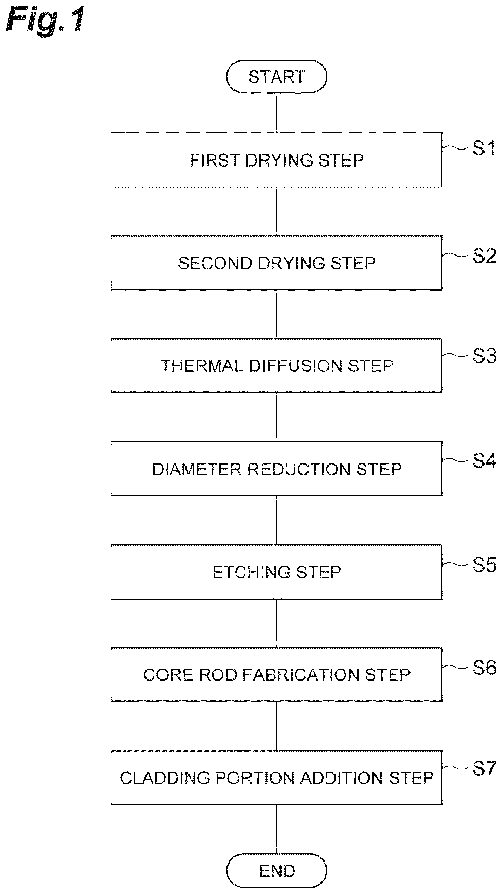

Fig. 1 is a flowchart for describing the optical fiber preform manufacturing method according to the present embodiment. The optical fiber preform manufacturing method according to the present embodiment includes a first drying step S1, a second drying step S2, a thermal diffusion step S3, a diameter reduction step S4, an etching step S5, a core rod fabrication step S6, and a cladding portion addition step S7, and the optical fiber preform is manufactured by performing these steps S1 to S7 in order.

In the first drying step S1, drying of two or more kinds of alkali metal salt raw materials containing mutually different alkali metal elements is performed at a temperature equal to or lower than a lowest temperature among melting point temperatures of the two or more kinds of alkali metal salt raw materials. In addition, the temperature at this time is preferably 270°C or higher. In the first drying step S1, moisture adhering to a surface of the alkali metal salt raw material is removed.

The alkali metal element to be used is any of Na (sodium), K (potassium), Rb (rubidium), and Cs (cesium). As the alkali metal salt raw material, a compound of the alkali metal element and a halogen element is preferable. Incidentally, the available halogen element is any of Br (bromine), I (iodine), and Cl(chlorine).

The two or more kinds of alkali metal salt raw materials are preferably compounds of each alkali metal element and a halogen element common to the respective alkali metal elements. That is, it is preferable that all the two or more kinds of alkali metal salt raw materials be any of the bromine compound, the iodine compound, and the chlorine compound. With such a configuration, it becomes possible to dope the alkali metal element within an intended concentration range.

Incidentally, if these raw materials (alkali metal salt raw materials) are dried at a temperature higher than the melting point temperature of the alkali metal salt raw material, the raw material melts. Such raw material melting causes a reaction between moisture physically adsorbed on a surface of the raw material and the alkali metal element, and thus, there is a concern that the raw material itself becomes alkaline hydrate. Thus, the first drying step S1 is provided as a step of volatilizing moisture physically adsorbed on the surface of the raw material before melting the raw material in the present embodiment. With this first drying step S1, it is possible to reduce an OH loss increase of the optical fiber as a final product.

In the second drying step S2, drying of the two or more kinds of alkali metal salt raw materials is performed at a temperature which is equal to or higher than a highest temperature among the melting point temperatures of the two or more kinds of alkali metal salt raw materials and at which vapor pressures of all the two or more kinds of alkali metal salt raw materials are 266.645 Pa (2 mmHg) or less. In addition, the temperature at this time is preferably a temperature at which the vapor pressures of all the two or more kinds of alkali metal salt raw materials are 266.645 Pa (2 mmHg) or less and at least one vapor pressure is 133.322 Pa (1 mmHg) or less. As more preferred aspects, a temperature at which all the vapor pressures are 266.645 Pa (2 mmHg) or less and at least one vapor pressure is 66.6612 Pa (0.5 mmHg) or less is preferable, and a temperature at which all the vapor pressures are 266.645 Pa (2 mmHg) or less and at least one vapor pressure is 39.9967 Pa (0.3 mmHg) or less is more preferable. With the second drying step S2, moisture contained inside the alkali metal salt raw material can be removed.

Incidentally, the amount of consumption increases (cost is high) regarding any raw material whose vapor pressure of the alkali metal salt raw material exceeds 266.645 Pa (2 mmHg) and concentration variations become great in the second drying step. As the vapor pressure of the alkali metal salt raw material becomes lower, the consumption of the raw material decreases (cost is suppressed), and it becomes possible to dope the alkali metal element within the intended concentration range.

In the thermal diffusion step S3, the two or more kinds of alkali metal salt raw materials are simultaneously heated to generate vapor of these alkali metal salt raw materials. In addition, the generated vapor and carrier gas (such as O₂) are supplied from one end side of a silica-based type glass pipe to the inside of the glass pipe. At that time, the glass pipe is heated by a heat source relatively moving in the longitudinal direction of the glass pipe. With this configuration, an oxidation reaction of two or more kinds of alkali metal elements contained in the vapor occurs, and two or more kinds of alkali metal element oxides are thermally diffused to the inner surface of the glass pipe.

In the thermal diffusion step S3, it is preferable that the two or more kinds of alkali metal element oxides be thermally diffused to the inner surface of the glass pipe such that a maximum peak concentration among concentrations of two or more kinds of alkali metal elements contained in the generated vapor is 200 wt ppm or more. It is possible to reduce the viscosity of the core portion in drawing of the optical fiber preform by doping the two or more kinds of alkali metal elements having different diffusion coefficients. In other words, it is possible to reduce density fluctuations of the glass, and it becomes possible to manufacture the optical fiber with a low loss.

The glass pipe to be used preferably contains chlorine and fluorine. In addition, an average concentration of each of chlorine and fluorine contained in the glass pipe is preferably 10 wt ppm or more. Incidentally, a concentration of other impurities excluding the chlorine and fluorine among impurities contained in the glass pipe is preferably 10 wt ppm or less. A certain amount of chlorine and fluorine are necessary in a process of dehydrating the glass pipe. As the concentration of the other impurities is lower, a transmission loss of the optical fiber can be reduced.

Incidentally, when the first drying step, the second drying step, and the thermal diffusion step are separately performed for each of two or more kinds of alkali metal salt raw materials, a step of separating a raw material reservoir at the time of switching the raw material to be inputted is required. In this case, since the inside of the glass pipe contacts the atmosphere, there is a concern that impurities such as moisture are mixed and work time becomes long. On the contrary, when the first drying step S1, the second drying step S2, and the thermal diffusion step S3 are simultaneously performed for the two or more kinds of alkali metal salt raw materials, such problems do not occur.

In the diameter reduction step S4, a diameter of the glass pipe is reduced by heating the glass pipe with the heat source. In the subsequent etching step S5, an etching gas is supplied inside the glass pipe while heating the glass pipe with the heat source so as to perform vapor phase etching on the inner surface of the glass pipe.

In the core rod fabrication step S6, a glass rod is obtained by collapsing the glass pipe. Incidentally, a rod from which an OH group has been removed by grinding an outer periphery of the glass rod is used as a first core portion if necessary. A second core portion is added around the first core portion (glass rod), thereby fabricating a core rod.

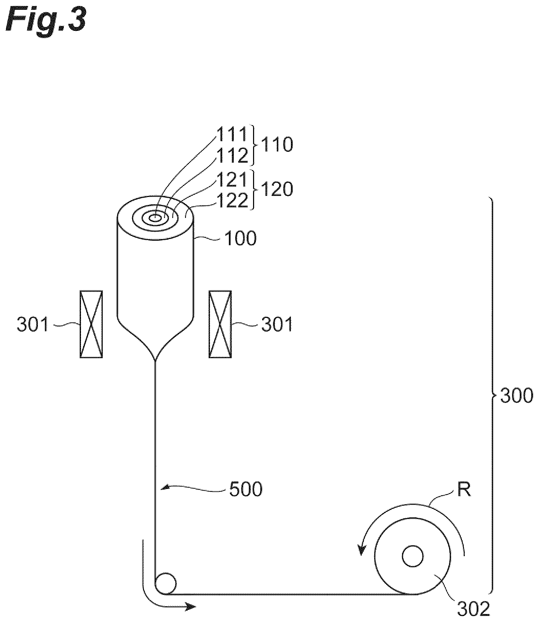

In the cladding portion addition step S7, a cladding portion is added on an outer periphery of the core rod. As a result, the optical fiber preform is obtained. When adding the cladding portion, a first cladding portion may be added on the outer circumferential surface of the core rod, and then, a second cladding portion may be added on an outer circumferential surface of the first cladding portion (see Fig. 3).

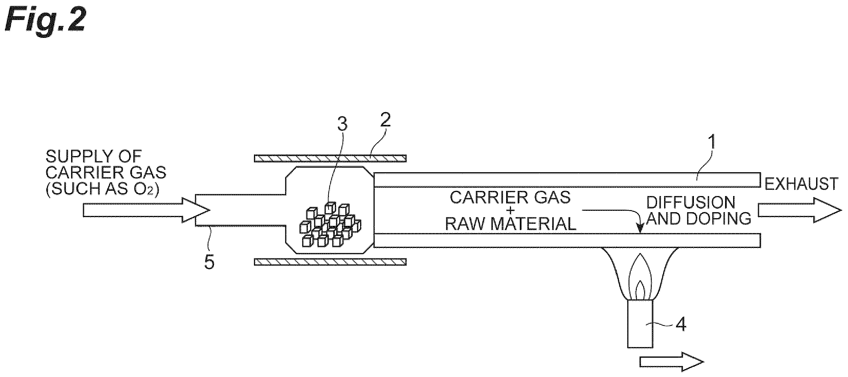

Next, various conditions of each step will be described together with numerical values in samples of the present embodiment and comparative examples. Fig. 2 is a view for describing the first drying step S1, the second drying step S2, and the thermal diffusion step S3. As a starting material, a glass pipe 1 is manufactured. The preferable glass pipe 1 contains chlorine of 50 wt ppm to 2000 wt ppm and fluorine of 2000 wt ppm or more, and has a concentration of the other impurities of a lower detection limit (about 1 wt ppm) or less. A preferable outer diameter of the glass pipe 1 is 20 to 35 mm and a preferable inner diameter thereof is 10 to 20 mm. As an example, the glass pipe 1 contains 100 wt ppm of chlorine and 2,000 wt ppm or 6,000 wt ppm of fluorine. The outer diameter of the glass pipe 1 is 26 mm, and the inner diameter thereof is 15 mm. A handling glass pipe 5 is connected to one end of the above glass pipe 1, and a part of the handling glass pipe 5 is used as a raw material reservoir. Incidentally, alkali metal salt raw materials 3 are placed in the raw material reservoir. Kinds and masses of the raw materials placed in the raw material reservoir differ for each sample. Incidentally, a part of the glass pipe 1 may be used as the raw material reservoir.

In the first drying step S1, a state where the outside of the raw material reservoir is heated to a predetermined temperature by an external heat source (electric furnace) 2 while introducing 3 SLM (3 L/min in terms of the standard state) of dry nitrogen (having a dew point of -76°C or lower) serving as a carrier gas into the raw material reservoir is maintained for a predetermined time. As a result, the alkali metal salt raw materials 3 in the raw material reservoir are dried.

In the second drying step S2, the alkali metal salt raw materials are dried at a temperature equal to or higher than melting point temperatures of the alkali metal salt raw materials 3. The temperature in the second drying step S2 differs for each of the samples of the present embodiment and the comparative examples.

In the thermal diffusion step S3, the temperature of the raw material reservoir is adjusted to 800°C, and then, 1 SLM of dry oxygen serving as a carrier gas is introduced into the raw material reservoir and the glass pipe 1. During the introduction of the carrier gas, the glass pipe 1 is heated by the external heat source (oxyhydrogen burner) 4 such that the outer surface has a temperature of 1500°C or higher, for example, 2000°C. At this time, the oxyhydrogen burner is moved at a constant speed, for example, at a speed of 30 mm/min. As such burner movement is performed 10 times or more in total, 15 times in one example, alkali metal elements diffuse to an inner surface of the glass pipe 1.

In the diameter reduction step S4, while heating the glass pipe 1 of which the alkali metal elements have been diffused on the inner surface by the oxyhydrogen burner 4, a diameter reduction of the glass pipe 1 is performed such that an inner diameter of the glass pipe 1 is 6 mm or smaller, in one example, about 4 mm.

In the etching step S5, SF₆ and Cl₂ are supplied from a gas supply unit to the inside of the glass pipe 1 while heating the glass pipe 1 by the oxyhydrogen burner 4 to a temperature of 1500°C or higher, in one example, 2000°C. Incidentally, vapor phase etching of the inner surface of the glass pipe 1 is performed until the inner diameter of the glass pipe 1 is about 5 mm in the etching step S5.

In the core rod fabrication step S6, the glass pipe 1 to which an alkali metal element group has been doped is heated so as to obtain a temperature of 1500°C or higher with the oxyhydrogen burner 4, whereby collapsing of the glass pipe 1 is performed. Incidentally, the collapsing is performed while evacuating air such that an internal pressure of the glass pipe 1 becomes about 100 kPa in an absolute pressure. With this core rod fabrication step, a glass rod (alkali metal element-doped glass rod) having an outer diameter of about 25 mm is obtained. In addition, the outside of the glass rod is sufficiently grinded until OH groups disappear (specifically, until the outer diameter reaches about 70% or less of that after collapsing), whereby a first core portion 111 (constituting a part of the core rod 110 illustrated in Fig. 3) is obtained. In addition, a second core portion 112 (constituting a part of the core rod 110 illustrated in Fig. 3) having a diameter about three times a diameter of the first core portion is added to the outside of the first core portion. The second core portion 112 is comprised of silica-based glass doped with Cl of an average of 2,000 wt ppm or more, in one example, 6000 wt ppm, and the other impurities of 1 wt ppm or less. The first core portion 111 and the second core portion 112 together constitute the core rod 110 (constituting a central portion of an optical fiber preform 100 illustrated in Fig. 3).

In the cladding portion addition step S7, a silica-based glass doped with a fluorine element to form a first cladding portion 121 (constituting a part of a cladding portion 120 illustrated in Fig. 3) is synthesized on the outside of the core rod 110 (on an outer periphery of the second core portion 112). A relative refractive index difference of the first cladding portion 121 relative to the second core portion 112 is about -0.33% when a refractive index of the first cladding portion 121 is the smallest. In addition, a silica-based glass doped with fluorine having a relative refractive index difference of about -0.23% relative to the second core portion 112 is synthesized on the outside of the first cladding portion 121 as a second cladding portion 122. As the cladding portion 120 constituted by the first cladding portion 121 and the second cladding portion 122 is provided on the outer periphery of the core rod 110, the optical fiber preform 100 illustrated in Fig. 3 is obtained. By drawing this optical fiber preform 100, an optical fiber 500 of each sample according to the present embodiment and optical fibers according to the comparative examples are obtained. Incidentally, a cross-sectional structure of the optical fiber 500 is similar to a cross-sectional structure of the optical fiber preform 100 illustrated in Fig. 3. That is, the optical fiber 500 has a core corresponding to the core rod 110 and a cladding corresponding to the cladding portion 120. Further, in the example of Fig. 3, the core of the optical fiber 500 has a double core structure constituted by two regions corresponding to the first core portion 111 and the second core portion 112, respectively. On the other hand, the cladding of the optical fiber 500 has a double cladding structure constituted by two regions corresponding to the first cladding portion 121 and the second cladding portion 122, respectively.

Specifically, one end of the optical fiber preform 100 having the structure as described above is drawn by a drawing apparatus 300 illustrated in Fig. 3 to obtain the optical fiber 500. Incidentally, the drawing apparatus 300 illustrated in Fig. 3 at least includes: a heater 301 configured to heat one end of the set optical fiber preform 100 and a winding drum 302 configured to wind up the heated one end of the optical fiber preform 100 while applying a predetermined tension. The winding drum 302 rotates in a direction indicated by an arrow R in Fig. 3. At that time, an outer diameter of the optical fiber 500 is adjusted by adjusting the rotation speed of the winding drum 302. In addition, the tension (drawing tension) applied to the heated one end of the optical fiber preform 100 is adjusted by adjusting a heating temperature by the heater 301.

Next, each optical fiber of Sample 1 and Comparative Example 1 will be described. The optical fibers of Sample 1 and Comparative Example 1 were obtained by drawing an optical fiber preform manufactured by the above-described optical fiber preform manufacturing method using KBr (melting point 730°C) and CsBr (melting point 636°C) as alkali metal salt raw materials.

Specifically, in the first drying step in the preform manufacturing to obtain Sample 1, both the raw materials were dried for 30 minutes at 550°C lower than the melting points of both the raw materials. In addition, in the second drying step, both the raw materials were dried at 770°C higher than the melting points of both the raw materials. At the temperature of the second drying step, a vapor pressure of KBr was 93.3257 Pa (0.7 mmHg), and a vapor pressure of CsBr was 239.98 Pa (1.8 mmHg). In the obtained alkali metal element-doped glass rod, a K concentration was 1030 ppm, and a Cs concentration was 2520 ppm. An X concentration means a value obtained by averaging a local concentration of an element X in a spatial region where the local concentration of the element X is 50 ppm or more. A transmission loss of the optical fiber finally obtained as Sample 1 in a wavelength band of 1.38 µm was 1 dB/km or less.

On the other hand, the first drying step was performed under the same conditions as those of Sample 1 in the preform manufacturing to obtain Comparative Example 1. In the second drying step, both the raw materials were dried at 800°C higher than the melting points of both the raw materials. At the temperature of the second drying step, a vapor pressure of KBr was 159.987 Pa (1.2 mmHg), and a vapor pressure of CsBr was 413.299 Pa (3.1 mmHg). In the obtained alkali metal element-doped glass rod, a K concentration was 990 ppm, and a Cs concentration was 730 ppm. A transmission loss of the optical fiber finally obtained as Comparative Example 1 in a wavelength band of 1.38 µm was 1 dB/km or less.

Next, each optical fiber of Sample 2 and Comparative Example 2 will be described. The optical fibers of Sample 2 and Comparative Example 2 were obtained by drawing an optical fiber preform manufactured by the above-described optical fiber preform manufacturing method using KBr (melting point 730°C) and CsI (melting point 621°C) as alkali metal salt raw materials.

In the first drying step in the preform manufacturing to obtain Sample 2, both the raw materials were dried for 30 minutes at 550°C lower than the melting points of both the raw materials. In the second drying step, both the raw materials were dried at 730°C higher than the melting points of both the raw materials. At the temperature of the second drying step, a vapor pressure of KBr was 39.9967 Pa (0.3 mmHg), and a vapor pressure of CsI was 133.322 Pa (1 mmHg). Tg. In the obtained alkali metal element-doped glass rod, a K concentration was 1210 ppm, and a Cs concentration was 1940 ppm. An OH loss increase of the optical fiber finally obtained as Sample 2 in a wavelength band of 1.38 µm was 1 dB/km or less.

In the preform manufacturing to obtain Comparative Example 2, the first drying step was performed under the same conditions as those of Sample 2. In the second drying step, both the raw materials were dried at 800°C higher than the melting points of both the raw materials. At the temperature of the second drying step, a vapor pressure of KBr was 159.987 Pa (1.2 mmHg), and a vapor pressure of CsI was 613.283 Pa (4.6 mmHg). In the obtained alkali metal element-doped glass rod, a K concentration was 1480 ppm, and a Cs concentration was 210 ppm. A transmission loss of the optical fiber finally obtained as Comparative Example 2 in a wavelength band of 1.38 µm was 1 dB/km or less.

The above-described Patent Document 1 suggests a fact that, if the raw material is dried at a temperature at which the raw material is melted beyond a melting point temperature of the raw material as a condition of a second drying step in the case of using one kind of an alkali metal salt raw material, it is also possible to remove moisture inside the raw material, and an OH loss of 1.0 dB/km or less can be realized. In the case of using two or more kinds of alkali metal salt raw materials, melting points of the respective raw materials are different, and thus, it is necessary to perform the second drying step S2 at a temperature higher than the melting points of all the raw materials.

In Comparative Example 1 and Comparative Example 2, a doping concentration of alkali metal constituting the alkali metal salt raw material having a lower melting point (higher vapor pressure) is reduced. In this case, if the melting point temperatures of both the raw materials are separated, a vapor pressure of the raw material having a lower melting point becomes high when reaching the melting point temperature of the raw material having a higher melting point. Thus, it was shown that most of the raw material having the lower melting point was consumed, and the doping amount was reduced. Thus, it is desirable that the temperature of the second drying step exceed the melting point temperatures of all the raw materials used at the implemented temperature and vapor pressures thereof are small as in Sample 1 and Sample 2. A condition that the vapor pressures of the respective raw materials are 266.645 Pa (2 mmHg) or less is preferable. Although a preferable temperature range to implement the second drying step varies depending on a combination of raw materials, 730°C to 780°C is preferable when using KBr and CsBr, and 730°C to 810°C is preferable when using KBr and RbBr. A difference between melting points of raw materials to be used is preferably 100°C or lower, and according to the invention is 50°C or lower.

Next, each optical fiber of Samples 3A, 3B, and 3C according to the present embodiment will be described. The optical fibers of Samples 3A, 3B, and 3C were obtained by drawing an optical fiber preform manufactured by the above-described optical fiber preform manufacturing method using KBr (melting point 734°C) and RbBr (melting point 693°C) as alkali metal salt raw materials.

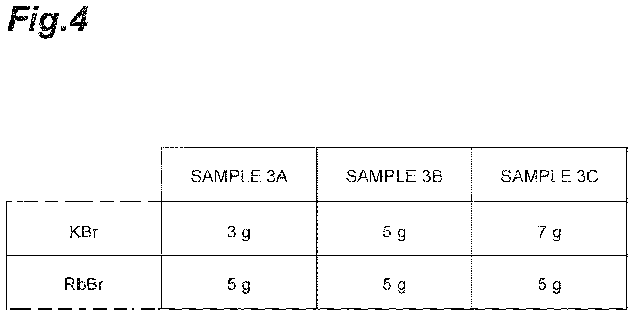

Fig. 4 is a table summarizing a mass of each raw material placed in a raw material reservoir in each of Samples 3A, 3B, and 3C. In Fig. 4, a mass of RbBr placed in the raw material reservoir was set to 5 g in all of Samples 3A, 3B, and 3C. On the other hand, a mass of KBr placed in the raw material reservoir was set to 3 g in Sample 3A, 5 g in Sample 3B, and 7 g in Sample 3C.

In the first drying step S1 in the preform manufacturing to obtain each of Samples 3A, 3B and 3C, 3 SLM (3 L/min in terms of the standard state) of dry nitrogen (having a dew point of -76°C or lower) serving as a carrier gas is introduced into the raw material reservoir. A state where the outside of the raw material reservoir is heated to 500°C by the external heat source (electric furnace) 2 while introducing the dry nitrogen is maintained for 30 minutes so as to perform drying of the alkali metal salt raw materials 3 placed in the raw material reservoir. In the second drying step S2, the alkali metal salt raw materials 3 placed in the raw material reservoir were dried at 770°C higher than the melting point temperatures of both the raw materials. A concentration of each alkali metal element was measured by an electron probe micro analyzer (EPMA) for an alkali metal element-doped glass rod having an outer diameter of about 16 mm obtained in the process of this preform manufacturing. In addition, a transmission loss at a wavelength of 1550 nm of the optical fiber finally obtained as each of Samples 3A, 3B, and 3C was measured.

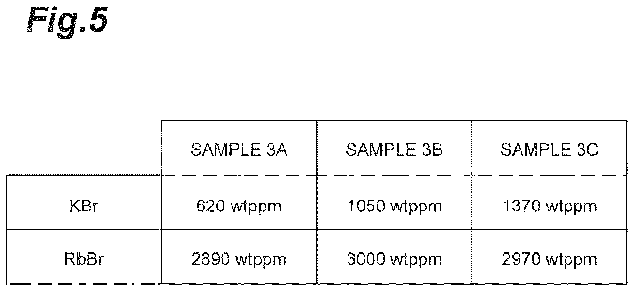

Fig. 5 is a table summarizing a peak concentration of each alkali metal element measured by EPMA in each of Samples 3A, 3B, and 3C. That is, a peak concentration of K in Sample 3A was 620 wt ppm and a peak concentration of Rb thereof was 2890 wt ppm in Fig. 5. A peak concentration of K in Sample 3B was 1050 wt ppm and a peak concentration of Rb thereof was 3000 wt ppm. A peak concentration of K in Sample 3C was 1370 wt ppm and a peak concentration of Rb thereof was 2970 wt ppm. Incidentally, a mass of RbBr inputted to the raw material reservoir was 5 g in all of Samples 3A, 3B, and 3C, and an Rb concentration was about 3000 wt ppm at the maximum. On the other hand, it was possible to confirm the tendency that a K concentration increases along with an increase in a mass of KBr inputted to the raw material reservoir from Fig. 5.

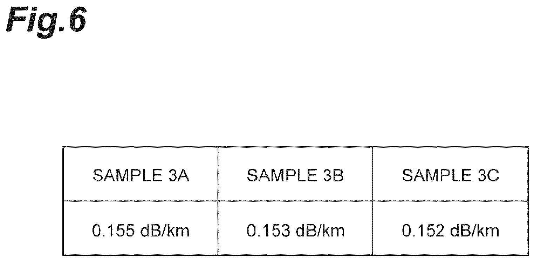

Fig. 6 is a table summarizing a transmission loss at a wavelength of 1550 nm measured in each of Samples 3A, 3B, and 3C. In Fig. 6, the transmission loss of Sample 3A was 0.155 dB/km, the transmission loss of Sample 3B was 0.153 dB/km, and the transmission loss of Sample 3C was 0.152 dB/km. As can be understood from Fig. 6, it was confirmed that the Rayleigh scattering loss is lower as an alkali metal concentration is higher.

Next, each optical fiber of Samples 4A, 4B, and 4C will be described. Samples 4A, 4B, and 4C were obtained by drawing an optical fiber preform manufactured by the above-described optical fiber preform manufacturing method using KBr (melting point 734°C) and RbI (melting point 647°C) as alkali metal salt raw materials.

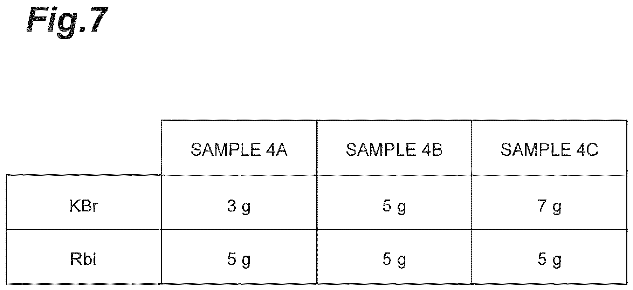

Fig. 7 is a table summarizing a mass of each of the raw materials placed in a raw material reservoir in each of Samples 4A, 4B, and 4C. In Fig. 7, a mass of RbI placed in the raw material reservoir was set to 5 g in all of Samples 4A, 4B, and 4C. On the other hand, a mass of KBr placed in the raw material reservoir was set to 3 g in Sample 4A, 5 g in Sample 4B, and 7 g in Sample 4C.

Even in the preform manufacturing to obtain Samples 4A, 4B, and 4C, the first drying step S 1 and the second drying step S2 were performed under the same conditions as those in the preform manufacturing to obtain Samples 3A, 3B, and 3C. For these Samples 4A, 4B, and 4C, a concentration of each alkali metal element in an alkali metal element-doped glass rod having an outer diameter of about 16 mm obtained in the process of the preform manufacturing was measured by EPMA, and a transmission loss at a wavelength of 1550 nm of the finally obtained optical fiber was measured.

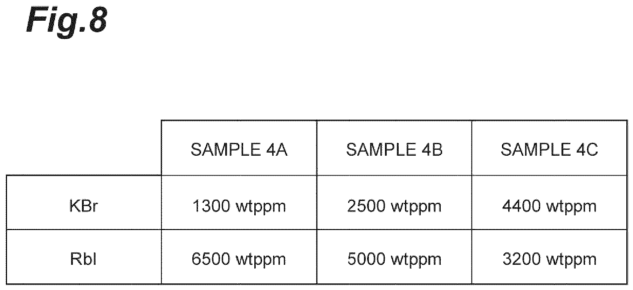

Fig. 8 is a table summarizing a peak concentration of each alkali metal element measured by EPMA in each of Samples 4A, 4B, and 4C. That is, a peak concentration of K in Sample 4A was 1300 wt ppm and a peak concentration of Rb thereof was 6500 wt ppm in Fig. 8. A peak concentration of K in Sample 4B was 2500 wt ppm and a peak concentration of Rb thereof was 5000 wt ppm. A peak concentration of K in Sample 4C was 4400 wt ppm and a peak concentration of Rb thereof was 3200 wt ppm. As can be seen from Fig. 8, an Rb concentration greatly varied in all of Samples 4A, 4B, and 4C even though a mass of RbBr inputted to the raw material reservoir was constant (5 g). In addition, a K concentration increased along with an increase in a mass of KBr inputted to the raw material reservoir, and the amount of the increase of the K concentration was larger than that of Samples 3A, 3B, and 3C.

It is considered that the reason is because some substances having a high vapor pressure have been changed to substances having a low vapor pressure when the raw material is melted in the raw material reservoir. Thus, when different halogen compounds such as a combination of bromide and iodide are used, concentrations of both the raw materials are changed, and it is difficult to control the concentration of each of the alkali metal elements. Therefore, it is desirable to use the same halogen compound from the viewpoint of control of the doping concentration.

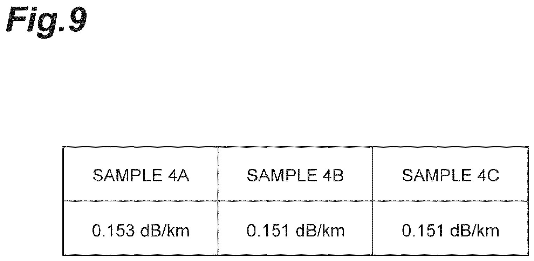

Fig. 9 is a table summarizing a transmission loss of an optical fiber at a wavelength of 1550 nm measured in each of Samples 4A, 4B, and 4C of the present embodiment. In Fig. 9, the transmission loss of Sample 4A was 0.153 dB/km, the transmission loss of Sample 4B was 0.151 dB/km, and the transmission loss of Sample 4C was 0.151 dB/km. As can be understood from Fig. 9, it was confirmed that the Rayleigh scattering loss is lower as the K concentration is higher. Samples 3A, 3B and 3C are made according the invention.

### Reference Signs List

1 ... glass pipe; 2.... external heat source (electric furnace); 3...alkali metal salt raw material; 4 ... external heat source (oxyhydrogen burner); 5 ... handling glass pipe; 100 ... optical fiber preform; 110 ... core rod; 111 ... first core portion; 112 ... second core portion; 120 ... cladding portion; 121 ... first cladding portion; and 122 ... second cladding portion.

## Claims

1. An optical fiber preform manufacturing method comprising:
a first drying step of drying two or more kinds of alkali metal salt raw materials containing mutually different alkali metal elements at a temperature equal to or lower than a lowest temperature among melting point temperatures of the two or more kinds of alkali metal salt raw materials;
a second drying step, after the first drying step, of drying the two or more kinds of alkali metal salt raw materials at a temperature which is equal to or higher than a highest temperature among the melting point temperatures of the two or more kinds of alkali metal salt raw materials and at which vapor pressures of all the two or more kinds of alkali metal salt raw materials are 266.645 Pa (2 mmHg) or less;
a thermal diffusion step, after the second drying step, of thermally diffusing two or more kinds of alkali metal element oxides on an inner surface of a silica-based glass pipe, the thermal diffusion step including simultaneously heating the two or more kinds of alkali metal salt raw materials to generate vapor of the two or more kinds of alkali metal salt raw materials, and supplying the vapor and a carrier gas from one end side of the glass pipe to an inside of the glass pipe while heating the glass pipe with a heat source to cause an oxidation reaction of two or more kinds of alkali metal elements contained in the vapor, the heat source relatively moving in a longitudinal direction of the glass pipe;
a core rod fabrication step, after the thermal diffusion step, of collapsing the glass pipe to fabricate a core rod; and
a cladding portion addition step, after the core rod fabrication step, of adding a cladding portion on an outer periphery of the core rod,
wherein a difference among the melting point temperatures of the two or more kinds of alkali metal salt raw materials is 50° C or lower.

2. The optical fiber preform manufacturing method according to claim 1, wherein
all of the two or more kinds of alkali metal salt raw materials are bromine compounds.

3. The optical fiber preform manufacturing method according to claim 1, wherein
all of the two or more kinds of alkali metal salt raw materials are iodine compounds.

4. The optical fiber preform manufacturing method according to claim 1, wherein
all of the two or more kinds of alkali metal salt raw materials are chlorine compounds.

5. The optical fiber preform manufacturing method according to any one of claims 1 to 4, wherein
the glass pipe contains chlorine and fluorine,
an average concentration of each of the chlorine and the fluorine contained in the glass pipe is 10 wt ppm or more, and
a concentration of impurities excluding the chlorine and the fluorine among impurities contained in the glass pipe is 10 wt ppm or less.

6. The optical fiber preform manufacturing method according to any one of claims 1 to 5, wherein a maximum peak concentration among concentrations of the two or more kinds of alkali metal elements contained in the vapor generated in the thermal diffusion step is 200 wt ppm or more.

## Patentansprüche

1. Herstellungsverfahren für eine Glasfaservorform, umfassend:
einen ersten Trocknungsschritt zum Trocknen zweier oder mehrerer Arten von Rohstoffen aus Alkalimetallsalz, die voneinander verschiedene Alkalimetallelemente auf einer Temperatur gleich wie, oder niedriger als eine niedrigste Temperatur aus Schmelzpunkttemperaturen der beiden oder mehreren Arten von Rohstoffen aus Alkalimetallsalz enthalten;
einen zweiten Trocknungsschritt nach dem ersten Trocknungsschritt, zum Trocknen der beiden oder mehreren Arten von Rohstoffen aus Alkalimetallsalz auf einer Temperatur, die gleich wie, oder höher als eine höchste Temperatur aus den Schmelzpunkttemperaturen der beiden oder mehreren Arten von Rohstoffen aus Alkalimetallsalz ist, und bei der Dampfdrücke aller der beiden oder mehreren Arten von Rohstoffen aus Alkalimetallsalz 266,645 Pa (2 mmHg) oder weniger betragen;
einen Wärmediffusionsschritt, nach dem zweiten Trocknungsschritt, zur Wärmediffusion zweier oder mehrerer Arten von Alkalimetallelementoxiden an einer Innenoberfläche eines Glasrohres auf Basis von Siliziumdioxid, wobei der Wärmediffusionsschritt gleichzeitig das Erwärmen der beiden oder mehreren Arten von Rohstoffen aus Alkalimetallsalz umfasst, um Dampf der beiden oder mehreren Arten von Rohstoffen aus Alkalimetallsalz zu erzeugen, und den Dampf und ein Trägergas von einer Endseite des Glasrohres zu einer Innenseite des Glasrohres zuzuführen, während das Glasrohr mit einer Wärmequelle erwärmt wird, um eine Oxidationsreaktion von zwei oder mehreren Arten von Alkalimetallelementen zu bewirken, die in dem Dampf enthalten sind, wobei sich die Wärmequelle relativ in einer Längsrichtung des Glasrohres bewegt;
einen Kernstab-Fertigungsschritt nach dem Wärmediffusionsschritt durch Zusammenbrechen des Glasrohres zur Fertigung des Kernstabes; und
einen Schritt zum Hinzufügen eines Umhüllungsabschnitts nach dem Kernstab-Fertigungsschritt, durch Hinzufügen eines Umhüllungsabschnitts an einem Außenumfang des Kernstabes,
wobei ein Unterschied unter den Schmelzpunkttemperaturen der beiden oder mehreren Arten von Rohstoffen aus Alkalimetallsalz 50° C oder weniger beträgt.

2. Herstellungsverfahren für eine Glasfaservorform nach Anspruch 1, wobei
alle von den beiden oder mehreren Arten von Rohstoffen aus Alkalimetallsalz Brom-Verbindungen sind.

3. Herstellungsverfahren für eine Glasfaservorform nach Anspruch 1, wobei
alle von den beiden oder mehreren Arten von Rohstoffen aus Alkalimetallsalz JodVerbindungen sind.

4. Herstellungsverfahren für eine Glasfaservorform nach Anspruch 1, wobei
alle von den beiden oder mehreren Arten von Rohstoffen aus Alkalimetallsalz Chlor-Verbindungen sind.

5. Herstellungsverfahren für eine Glasfaservorform nach einem der Ansprüche 1 bis 4, wobei
das Glasrohr Chlor und Fluor enthält,
eine durchschnittliche Konzentration von jedem von Chlor und Fluor, die in dem Glasrohr enthalten sind, 10 Gew.-ppm oder mehr beträgt, und
eine Konzentration von Verunreinigungen, ausgenommen Chlor und Fluor unter den Verunreinigungen, die in dem Glasrohr enthalten sind, 10 Gew.-ppm oder weniger beträgt.

6. Herstellungsverfahren für eine Glasfaservorform nach einem der Ansprüche 1 bis 5, wobei eine maximale Spitzenkonzentration unter den Konzentrationen der beiden oder mehreren Arten von Alkalimetallelementen, die in dem Dampf enthalten sind, der in dem Wärmediffusionsschritt erzeugt wird, 200 Gew.-ppm oder mehr beträgt.

## Revendications

1. Procédé de fabrication de préforme de fibre optique comprenant :
une première étape de séchage consistant à sécher deux, ou plus, types de matières premières de sel de métal alcalin contenant mutuellement différents éléments de métal alcalin à une température égale ou inférieure à la température la plus basse parmi des températures de point de fusion des deux, ou plus, types de matières premières de sel de métal alcalin ;
une seconde étape de séchage, après la première étape de séchage, consistant à sécher les deux, ou plus, types de matières premières de sel de métal alcalin à une température qui est égale ou supérieure à la température la plus élevée parmi des températures de point de fusion des deux, ou plus, types de matières premières de sel de métal alcalin et à laquelle des pressions de vapeur de la totalité des deux, ou plus, types de matières premières de sel de métal alcalin sont 266,645 Pa (2 mm de Hg) ou moins ;
une étape de diffusion thermique, après la seconde étape de séchage, consistant à diffuser thermiquement deux, ou plus, types d'oxydes d'élément de métal alcalin sur une surface interne d'un tube de verre à base de quartz, l'étape de diffusion thermique incluant en même temps le chauffage des deux, ou plus, types de matières premières de sel de métal alcalin pour générer de la vapeur des deux, ou plus, types de matières premières de sel de métal alcalin et la fourniture de la vapeur et d'un gaz porteur depuis un côté d'extrémité du tube de verre jusqu'à l'intérieur du tube de verre tout en chauffant le tube de verre avec une source de chaleur pour provoquer une réaction d'oxydation des deux, ou plus, d'éléments de métal alcalin contenus dans la vapeur, la source de chaleur se délaçant relativement dans une direction longitudinale du tube de verre ;
une étape de fabrication de tige d'âme, après l'étape de diffusion thermique, consistant à plier le tube de verre pour fabriquer une tige d'âme ; et
une étape d'ajout de partie de gainage, après l'étape de fabrication de tige d'âme, consistant à ajouter une partie de gainage sur une périphérie externe de la tige d'âme,
dans lequel une différence entre les températures de point de fusion des deux, ou plus, types de matières premières de sel de métal alcalin est 50 °C ou moins.

2. Procédé de fabrication de préforme de fibre optique selon la revendication 1, dans lequel
la totalité des deux, ou plus, types de matières premières de sel de métal alcalin sont des composés de brome.

3. Procédé de fabrication de préforme de fibre optique selon la revendication 1, dans lequel
la totalité des deux, ou plus, types de matières premières de sel de métal alcalin sont des composés d'iode.

4. Procédé de fabrication de préforme de fibre optique selon la revendication 1, dans lequel
la totalité des deux, ou plus, types de matières premières de sel de métal alcalin sont des composés de chlore.

5. Procédé de fabrication de préforme de fibre optique selon l'une quelconque des revendications 1 à 4, dans lequel
le tube de verre contient du chlore et de fluor,
une concentration moyenne de chacun du chlore et du fluor contenus dans le tube de verre est 10 ppm en poids ou plus et
une concentration d'impuretés à l'exclusion du chlore et du fluor parmi des impuretés contenues dans le tube de verre est 10 ppm en poids ou moins.

6. Procédé de fabrication de préforme de fibre optique selon l'une quelconque des revendications 1 à 5, dans lequel une concentration de pointe maximale parmi des concentration des deux, ou plus, types d'éléments de métal alcalin contenus dans la vapeur générée dans l'étape de diffusion thermique est 200 ppm en poids ou plus.
